# EUROPEAN PATENT SPECIFICATION

(11) **EP 3 810 862 B1**
(45) Date of publication and mention of the grant of the patent: **25.01.2023**
(21) Application number: 18826578.9
(22) Date of filing: 17.12.2018
(51) Int. Cl.: E03C 1/042, E03C 1/02, F16K 31/44, F16K 31/60, F16K 17/16

(54) **VALVE WITH ROCKER**
VENTIL MIT WIPPE
SOUPAPE À CULBUTEUR

(30) Priority: 21.06.2018 DE 102018004934
(43) Date of publication of application: 28.04.2021
(73) Proprietor: HUSQVARNA AB, 561 82 Huskvarna (SE)
(72) Inventor: KAUPP, Rainer, 89143 Blaubeuren (DE)
(74) Representative: Finkele, Rolf
(86) International application number: PCT/EP2018/085240
(87) International publication number: WO 2019/242871

(56) References cited:
- WO-A1-2012/003709
- FR-A1- 2 866 941
- FR-B1- 2 866 941
- US-A- 1 868 316
- US-A- 2 545 810
- US-A- 4 512 551
- US-A1- 2011 107 918

## Description

### TECHNICAL FIELD

The present disclosure relates to dispensing devices. More specifically, the present disclosure relates to improved valve actuation by a rocker of the dispensing devices.

### BACKGROUND

Dispensing devices are used to dispense liquids and are operated generally by a manual action which leads to actuation of a lever associated with such devices. Generally, the dispensing devices include a valve which can be actuated by a pin or disc shaped element. The element is adapted to be actuated by the lever based upon user action. In some demanding cases, the lever may be required to be actuated by action of a container which is to be filled with material dispensed from the dispensing devices.

An example of a dispensing device is provided in U.S. patent application 6,789,708 (hereinafter referred to as '708 reference). The '708 reference discloses a dispenser which includes an actuation switch and an actuator. The actuation switch can either be manually activated in a first direction or it may be activated by pushing a container against the actuator in a second direction which, in turn, pushes the actuation switch in the first direction to dispense a use solution. However, '708 reference comes short of providing versatility in actuating the actuation switch by using any of manual action or the container.

US2011/107918A1, US1868316A and US2545810A disclose prior art valves according to the preamble of claim 1.

Thus, there is a need of more efficient and user-friendly actuation of valve of the dispensing devices, preferably by use of profile of the container.

### SUMMARY

In view of the above, it is an objective of the present invention to solve or at least reduce the drawbacks discussed above. The objective is achieved by a valve according to claim 1. The valve includes a valve housing. The valve includes a valve inlet defined in the valve housing. The valve includes a valve outlet defined in the valve housing. The valve includes a valve element coupled to the valve housing. The valve element selectively allows flow of a fluid from the valve inlet towards the valve outlet. The valve includes a valve pin coupled to the valve element. The valve pin is adapted to actuate the valve element to allow flow of the fluid from the valve inlet towards the valve outlet. Further, the valve includes a rocker adapted to push the valve pin to actuate the valve element. The rocker extends between a first end, and a second end. The valve is characterized in that the rocker is adapted to push the valve pin when pressed at either one of the first end, the second end, or at a location between the first end and the second end. Thus, the present disclosure provides a simple, efficient, and user-friendly working of the valve with a convenient and location-flexible actuation of the rocker.

According to an embodiment of the present invention, the valve can be coupled to a water distributor. The valve can find applications with different systems such as water distributors, water computers, dispensers among others.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows perspective view of a valve of a dispensing device, in accordance with an embodiment of the present invention;
**FIG. 2** shows a cross-sectional view of the valve, in accordance with an embodiment of the present invention;
**FIG. 3** shows side perspective view of the valve, in accordance with an embodiment of the present invention; and
**FIG. 4** shows side cross-sectional view of the valve, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples of the invention and, although specific terms are employed, they are used in a generic and descriptive sense only and not for the purpose of limitation of the scope of the invention being set forth in the following claims.

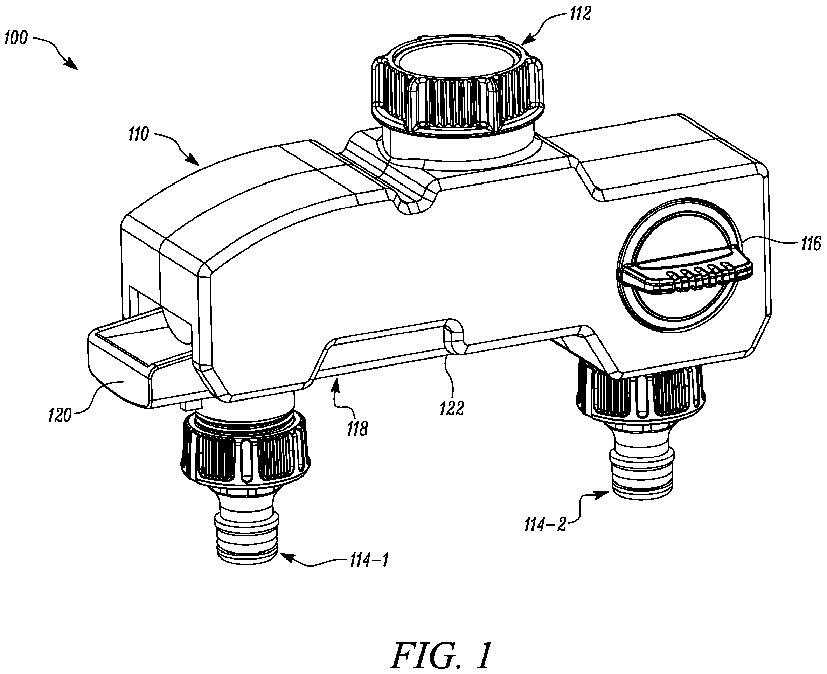

**FIG. 1** illustrates a valve **100.** The valve **100** includes a valve housing **110.** The valve **100** includes a valve inlet **112** defined in the valve housing **110.** The valve **100** includes one or more valve outlets **114-1, 114-2** (generally **114)** defined in the valve housing **110.** As illustrated, there can be multiple valve outlets **114** such as two valve outlets **114-1, 114-2** of the present disclosure. Further, the two-valve outlets **114-1, 114-2** may be configured to work substantially independently or dependently based upon the type of application. Moreover, the two-valve outlets **114-1, 114-2** may have same or different actuating means or mechanisms, such as for example, a rocker **118** of the present disclosure.

The valve housing **110** includes a knob arrangement **116** associated with valve outlet **114-2.** For conditions such as non-use case of the rocker **118** and the valve outlet **114-1** arrangement, the knob arrangement **116** can be given preference to obtain desired fluid discharge from the valve outlet **114-2.** Moreover, the rocker **118** and the valve outlet **114-1** arrangement of the present disclosure is preferred to be used with the knob arrangement **116,** however, it can be readily employed with any other arrangement without departing from the scope of the present disclosure. In some embodiments, the housing **110** may be housing of a water distributor (not shown) and a primary valve arrangement with a rocker **118** and a secondary valve arrangement with a knob arrangement **116** may be provided to cater to two water outlets **114-1, 114-2.**

The rocker **118,** as illustrated herein, can be a plate-like element provided around lower portion of the valve **100** for better accessibility, and thereby, lead to ease of implementation of the valve **100.** Although, the rocker **118** of the present disclosure has been illustrated with plate-like shape, other shapes or designs (say a pin, bar, lever, or U shape) of the rocker **118** have been contemplated and are well within the scope of the present disclosure. The rocker **118** includes a first end **120** and a second end **122,** which can be used to deliver desired actuation to the rocker **118** by manual action or even by contact with a container (not shown). As evident, the amount of actuation of the rocker **118** will decide the flow of fluid out of the valve outlet **114-1** associated with the actuated rocker **118.** The valve **100** may also include a button (not shown) to selectively work with the rocker **118** depending upon the need. In some embodiments, there can be means to set sensitivity (or flow rate) of the rocker **118.** The sensitivity can be measured as displacement of the rocker **118** per unit force (m/N in SI units). Further, there can be means to optimize any other setting associated with the rocker **118** as would be required for applications with different dispensers, water computers and the like.

The rocker **118** shall preferably have at least two contacts or supporting points i.e. the first end **120** and the second end **122,** disposed around the valve outlet **114-1.** This allows actuation of the rocker **118** when pushed around center or anywhere between the at least two contacts or supporting points. Thus, the present disclosure allows fluid discharge from the valve outlet **114-1** either by moving the container (not shown) against bottom of the rocker **118** or even by manual action on the rocker **118.**

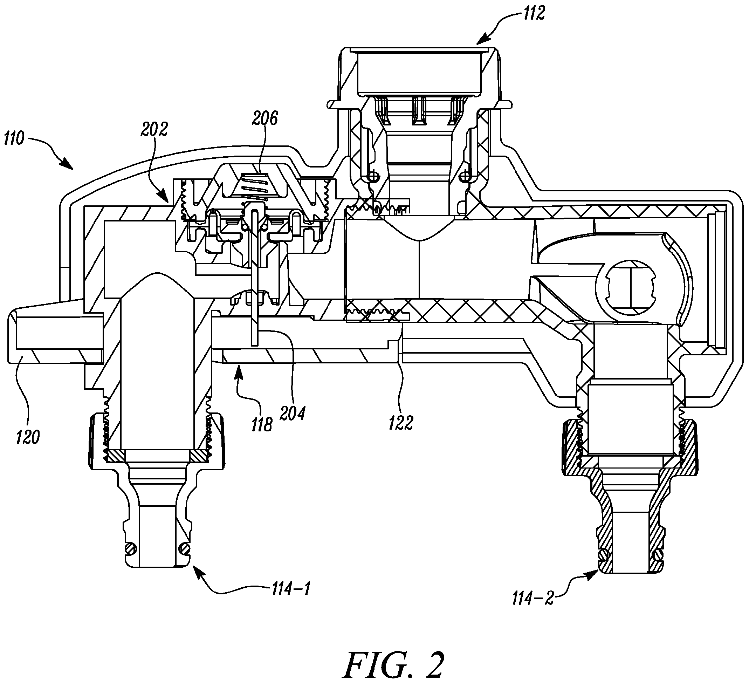

**FIG. 2** illustrates a cross-sectional view of the valve **100.** The valve **100** includes a valve element **202** coupled to the valve housing **110.** The valve element **202** is adapted to selectively allow flow of the fluid from the valve inlet **112** towards the valve outlet **114-1.** The valve **100** includes a valve pin **204** coupled to the valve element **202.** The valve pin **204** has been illustrated as a circular or disc-like element, however, specifications such as shape, design, dimensions of the valve pin **204** generally depend upon the valve element **202** or the valve **100** itself, among other factors. Thus, the present disclosure is not to be limited by the valve pin **204** in any manner whatsoever. The valve pin **204** is biased by a spring **206** although any other biasing means such as cam, gear or any other mechanism as known or employed in the relevant art, may be used. The valve pin **204** is adapted to actuate the valve element **202** to allow flow of the fluid from the valve inlet **112** towards the valve outlet **114-1.**

The valve **100** includes the rocker **118** adapted to push the valve pin **204** to actuate the valve element **202.** As explained earlier, the rocker **118** extends between the first end **120,** and the second end **122.** Thus, the rocker **118** of the present disclosure is adapted to push the valve pin **204** when pressed at either one of the first end **120,** the second end **122,** or at a location between the first end **120** and the second end **122.** This provides ease of operation particularly with cases involving users without empty hands to actuate the rocker **118.** In such cases, any object such as the container (not shown) can be used to make contact with and actuate the rocker **118** thereby making for a convenient and user-friendly operation.

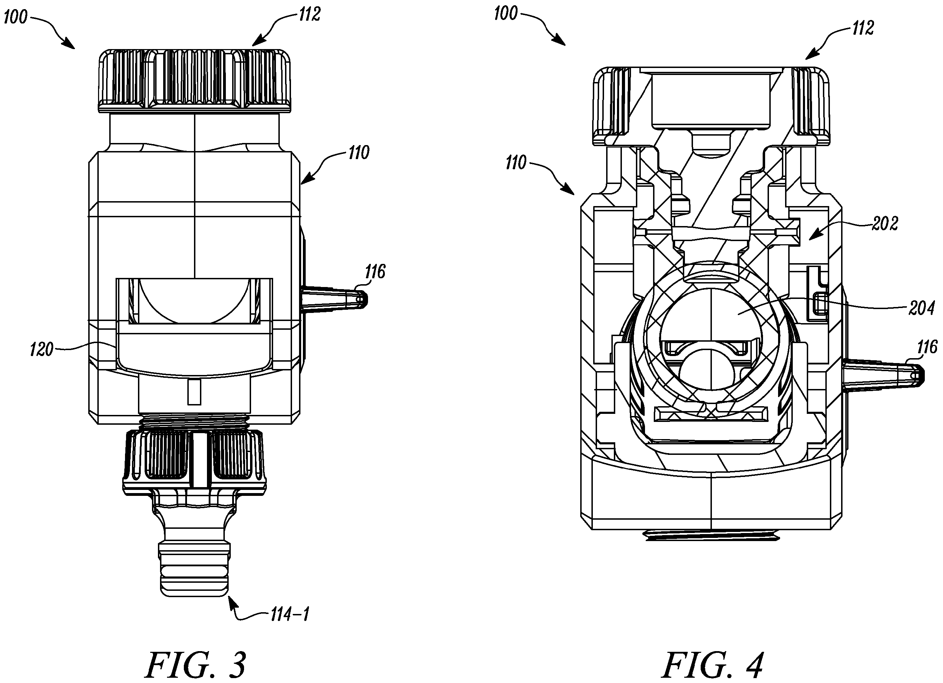

**FIGS. 3** and **4** illustrate side view and side cross-sectional view of the valve **100** respectively. As illustrated, the valve pin **204** is adapted to move depending upon position of the rocker **118** arm and thereby effectuate change in the flow of the fluid. Preferably, actuation of the rocker **118** of the valve **100** can be performed with borderline or side of the container (not shown) to allow simultaneous filling of the container (not shown) with the fluid being dispensed from the valve outlet **114-1.** This also frees hands of a user for any other demanding operation.

In some not claimed embodiments, the rocker **118** is manufactured by three-dimensional printing (also known as additive manufacturing or 3D printing). Further, the user of the valve **100** can be provided with a data file having pre-stored instructions to print the rocker **118** by a three-dimensional printer. These features enable custom designing or any modifications, if required, to be performed with least effort. Moreover, use of 3D printing allows more freedom in choice of materials such as plastics, polymers, metals, or any other material as know or used in the art. Lastly, the rocker **118** can be conveniently presented such as in a digital format keeping in mind type of applications or end-user preferences among other factors.

Depending upon different factors, the valve **100** of the present disclosure may find different applications such as by being coupled to a water distributor, dispenser and the like. Without departing from the scope of the present disclosure, one or more valve housings **110** may be configured together to work independently or in unison for more demanding or large-scale applications. More particularly, the valve **100** may find applications with systems such as, but not limited to, a standalone device being screwed to a tap (or simply any fluid supply), a twin-tap connector or a multi-channel water distributor.

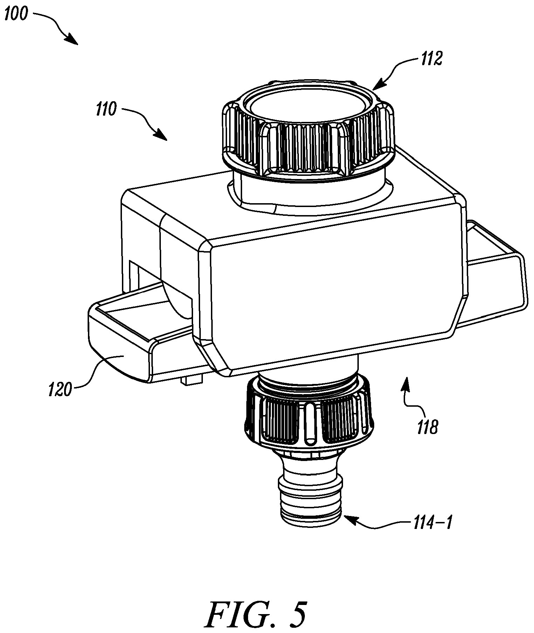

**FIGS. 5** to **8** illustrate various embodiments of application of the valve **100** described by the present disclosure. **FIG. 5** shows the valve 100 as a standalone product. The valve 100 may be coupled to a water supply, a hose pipe, or any other such arrangement through the valve inlet **112.** The valve **100** may be actuated by pressing the rocker **118.** As the rocker **118** can be conveniently 3D printed, the rocker **118** may be provided in a variety of shapes and sizes as well as per application requirements. More specifically, a user may appropriately customize the rocker **118** as per application requirements and make better use of the valve **100.** For example, the valve outlet **114-1** may supply water to water collection containers (not shown). In some embodiments, the rocker **118** may have a large size to cater to large water collection containers. In alternative embodiments, the rocker **118** may be of a relatively smaller size when catering to small sized water containers. As an exemplary scenario, size and shape of the rocker **118** may be different altogether when the valve outlet **114-1** is coupled to a hose pipe (not shown).

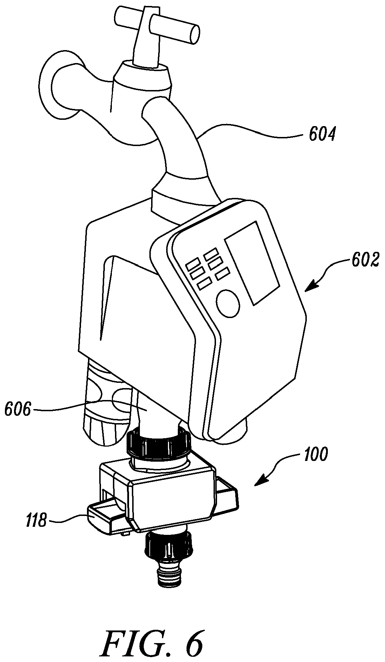

**FIG. 6** shows the valve **100** coupled to a water distributor **602.** The water distributor **602** receives water from a tap **604,** and supplies water through an outlet **606.** The valve **100** is coupled to the outlet **606.** The valve **100** controls flow of water through the outlet **606.** The valve **100** may be actuated by pressing the rocker **118.** A user may avoid setting the water distributor **602** ON and OFF repeatedly by setting an amount of water flow initially with the water distributor **602.** Then, a user may control the flow of water through the valve **100** by simply using the rocker **118** to actuate the valve **100.**

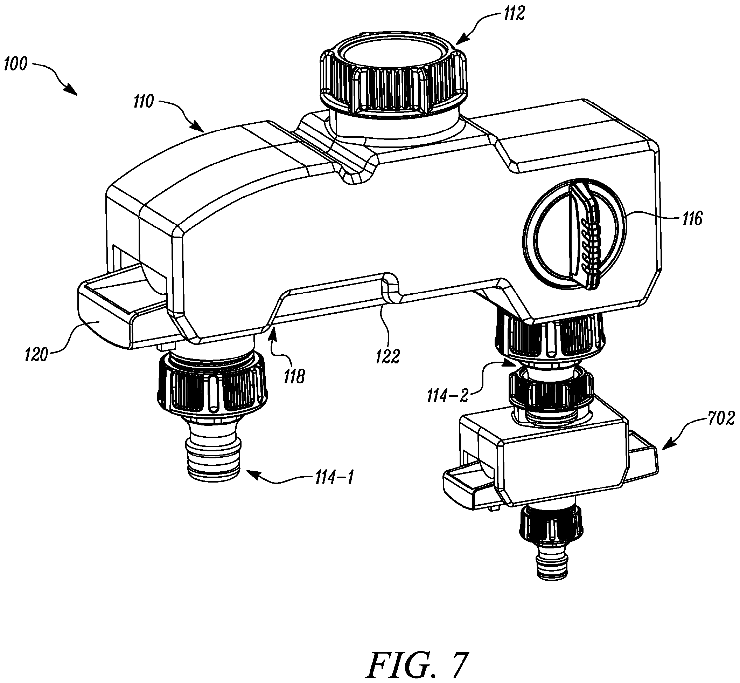

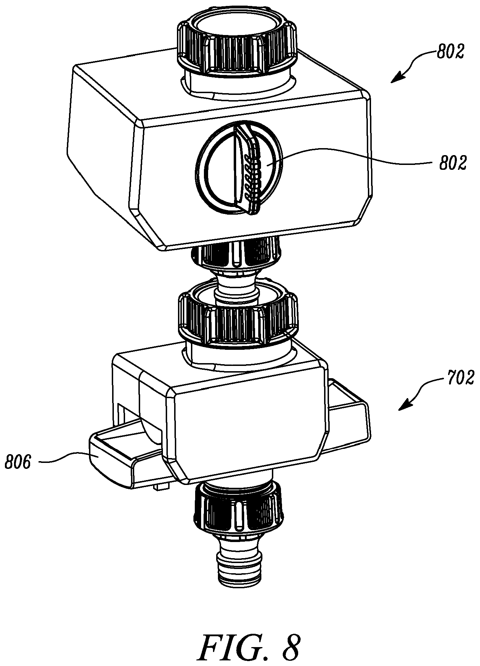

**FIG. 7** shows another embodiment of the present disclosure. The valve housing **110** includes two valve arrangements. The knob arrangement **116** may always be provided in an open state, and then another valve **702** may be coupled to the valve outlet **114-2** to control flow of water conveniently therefrom. It should be contemplated that the valve 702 is functionally and structurally similar to the valve **100.** Another similar exemplary embodiment is shown in **FIG. 8****.** A valve **802** with manual adjustment by knob arrangement **804** is further coupled with the valve **702.** The knob arrangement **804** may always be provided in an open position, and a rocker **806** may be used to control flow of water through the valve **802.**

According to the invention there is a locking mechanism provided between the rocker **(118, 806)** and the valve housing **(110).** This locking mechanism will cause the rocker **(118, 806)** when once pushed out of the closed position of the valve **(100)** to stay locked in its pushed position, so that the valve **(100)** stays open. Thus it need just one pushing to constantly open the valve **(100).** When pushed again the rocker **(110, 806)** closes the valve **(100)** again. This very much the same than trigger mechanism known from pens.

In the drawings and specification, there have been disclosed preferred embodiments and examples of the invention and, although specific terms are employed, they are used in a generic and descriptive sense.

### LIST OF ELEMENTS

- **100**: Valve
- **110**: Valve Housing
- **112**: Valve Inlet
- **114-1**: Valve Outlet
- **114-2**: Valve Outlet
- **116**: Knob Arrangement
- **118**: Rocker
- **120**: First End
- **122**: Second End
- **202**: Valve Element
- **204**: Valve Pin
- **206**: Spring
- **602**: Water distributor
- **604**: Tap
- **606**: Outlet
- **702**: Valve
- **802**: Valve
- **804**: Knob arrangement
- **806**: Rocker

## Claims

1. A valve **(100)** comprising:
a valve housing **(110);**
a valve inlet **(112)** defined in the valve housing **(110);**
a valve outlet **(114-1)** defined in the valve housing **(110);**
a valve element **(202)** coupled to the valve housing **(110),** wherein the valve element **(202)** is adapted to selectively allow flow of a fluid from the valve inlet **(112)** towards the valve outlet **(114-1);**
a valve pin **(204)** coupled to the valve element **(202),** wherein the valve pin **(204)** is adapted to actuate the valve element **(202)** to allow flow of the fluid from the valve inlet **(112)** towards the valve outlet **(114-1);** and
a rocker **(118, 806)** adapted to push the valve pin **(204)** to actuate the valve element **(202),** wherein the rocker **(118, 806)** extends between a first end **(120),** and a second end **(122),**
the rocker **(118, 806)** is adapted to push the valve pin **(204)** when pressed at either one of the first end **(120),** the second end **(122),** or at a location between the first end **(120)** and the second end **(122),**
**characterized in that:**
a locking mechanism is provided between the rocker **(118, 806)** and the valve housing **(110)** that locks the rocker **(118, 806)** when once pushed out of the closed position of the valve **(100)** in its pushed position, so that the valve **(100)** stays open, and when pushed again closes the valve **(100).**

2. The valve **(100)** of claim **1,** wherein the valve **(100)** can be housed inside a housing of a water distributor.

3. The valve **(100)** of claim **2,** wherein the housing further includes a secondary valve having another water outlet **(114-2).**

4. The valve **(100)** of claim **3,** wherein the water outlet **(114-2)** further includes another valve **(702)** coupled to the water outlet **(114-2).**

5. The valve **(100)** of claim **1,** wherein the valve **(100)** can be coupled to an outlet **(606)** of a water distributor **(602).**

6. The valve **(100)** of claim **5,** wherein the outlet **(606)** of the water distributor **(602)** further includes a hose pipe coupled to the outlet **(606),** such that an amount of water being supplied to the hose pipe is controlled by the rocker **(118, 806).**

7. The valve **(100)** of claim **1** to **6,** wherein the rocker **(118, 806)** has two pivot points defined by the first end **(120)** and the second end **(122)** of the rocker **(118, 806).**

8. The valve **(100)** of claim **1,** wherein the rocker **(118, 806)** laterally extends over the valve outlet **(114-1).**

9. The valve **(100)** of claim **1,** wherein the rocker **(118, 806)** can be actuated through pressing by upper periphery of a water container.

## Patentansprüche

1. Ein Ventil (100), das Folgendes umfasst:
ein Ventilgehäuse (110);
einen Ventileinlass (112), der in dem Ventilgehäuse (110) definiert ist;
einen Ventilauslass (114-1), der in dem Ventilgehäuse (110) definiert ist;
ein Ventilelement (202), das mit dem Ventilgehäuse (110) gekoppelt ist, wobei das Ventilelement (202) so ausgebildet ist, dass es selektiv den Fluss eines Fluids vom Ventileinlass (112) zum Ventilauslass (114-1) ermöglicht;
einen Ventilstift (204), der mit dem Ventilelement (202) gekoppelt ist, wobei der Ventilstift (204) ausgebildet ist, das Ventilelement (202) zu betätigen, um einen Fluss des Fluids vom Ventileinlass (112) zum Ventilauslass (114-1) zu ermöglichen; und
einen Kipphebel (118, 806), der geeignet ist, den Ventilstift (204) zu drücken, um das Ventilelement (202) zu betätigen, wobei sich der Kipphebel (118, 806) zwischen einem ersten Ende (120) und einem zweiten Ende (122) erstreckt,
der Kipphebel (118, 806) geeignet ist, den Ventilstift (204) zu drücken, wenn er entweder am ersten Ende (120), am zweiten Ende (122) oder an einer Stelle zwischen dem ersten Ende (120) und dem zweiten Ende (122) gedrückt wird
**dadurch gekennzeichnet, dass**:
ein Verriegelungsmechanismus zwischen dem Umlenkhebel (118, 806) und dem Ventilgehäuse (110) vorgesehen ist, der den Umlenkhebel (118, 806) verriegelt, wenn er einmal aus der geschlossenen Position des Ventils (100) in seine geschobene Position geschoben wurde, so dass das Ventil (100) offen bleibt, und wenn er wieder geschoben wird, das Ventil (100) schließt.

2. Das Ventil (100) nach Anspruch 1, wobei das Ventil (100) in einem Gehäuse eines Wasserverteilers untergebracht werden kann.

3. Das Ventil (100) nach Anspruch 2, wobei das Gehäuse außerdem ein Sekundärventil mit einem weiteren Wasserauslass (114-2) umfasst.

4. Das Ventil (100) nach Anspruch 3, wobei der Wasserauslass (114-2) ferner ein weiteres Ventil (702) umfasst, das mit dem Wasserauslass (114-2) gekoppelt ist.

5. Das Ventil (100) nach Anspruch 1, wobei das Ventil (100) mit einem Auslass (606) eines Wasserverteilers (602) gekoppelt werden kann.

6. Das Ventil (100) nach Anspruch 5, wobei der Auslass (606) des Wasserverteilers (602) ferner ein mit dem Auslass (606) verbundenes Schlauchrohr umfasst, so dass eine dem Schlauchrohr zugeführte Wassermenge durch den Umlenkhebel (118, 806) gesteuert wird.

7. Das Ventil (100) nach einem der Ansprüche 1 bis 6, wobei der Umlenkhebel (118, 806) zwei Drehpunkte aufweist, die durch das erste Ende (120) und das zweite Ende (122) des Umlenkhebels (118, 806) definiert sind.

8. Das Ventil (100) nach Anspruch 1, wobei sich der Umlenkhebel (118, 806) seitlich über den Ventilauslass (114-1) erstreckt.

9. Das Ventil (100) nach Anspruch 1, wobei der Umlenkhebel (118, 806) durch Drücken des oberen Umfangs eines Wasserbehälters betätigt werden kann.

## Revendications

1. Soupape (100) comprenant :
un boîtier de soupape (110) ;
une entrée de soupape (112) définie dans le boîtier de soupape (110) ;
une sortie de soupape (114-1) définie dans le boîtier de soupape (110) ;
un élément de soupape (202) couplé au boîtier de soupape (110), dans lequel l'élément de soupape (202) est adapté pour permettre sélectivement l'écoulement d'un fluide depuis l'entrée de soupape (112) vers la sortie de soupape (114-1) ;
une tige de soupape (204) couplée à l'élément de soupape (202), dans laquelle la tige de soupape (204) est adaptée pour actionner l'élément de soupape (202) pour permettre l'écoulement du fluide depuis l'entrée de soupape (112) vers la sortie de soupape (114-1) ; et
un culbuteur (118, 806) adapté pour pousser la tige de soupape (204) pour actionner l'élément de soupape (202), dans lequel le culbuteur (118, 806) s'étend entre une première extrémité (120) et une seconde extrémité (122),
le culbuteur (118, 806) est adapté pour pousser la tige de soupape (204) lorsqu'il est pressé à l'une ou l'autre de la première extrémité (120), de la seconde extrémité (122), ou à un emplacement entre la première extrémité (120) et la seconde extrémité (122),
**caractérisée en ce que** :
un mécanisme de verrouillage est prévu entre le culbuteur (118, 806) et le boîtier de soupape (110) qui verrouille le culbuteur (118, 806) lorsqu'il est poussé une fois hors de la position fermée de la soupape (100) dans sa position poussée, de sorte que la soupape (100) reste ouverte, et lorsqu'il est poussé à nouveau, ferme la soupape (100).

2. Soupape (100) selon la revendication 1, dans laquelle la soupape (100) peut être logée à l'intérieur d'un boîtier d'un distributeur d'eau.

3. Soupape (100) selon la revendication 2, dans laquelle le logement comprend en outre une soupape secondaire ayant une autre sortie d'eau (114-2).

4. Soupape (100) selon la revendication 3, dans laquelle la sortie d'eau (114-2) comprend en outre une autre soupape (702) couplée à la sortie d'eau (114-2).

5. Soupape (100) selon la revendication 1, dans laquelle la soupape (100) peut être couplée à une sortie (606) d'un distributeur d'eau (602).

6. Soupape (100) selon la revendication 5, dans laquelle la sortie (606) du distributeur d'eau (602) comprend en outre un tuyau flexible couplé à la sortie (606), de sorte qu'une quantité d'eau fournie au tuyau flexible est contrôlée par le culbuteur (118, 806).

7. Soupape (100) selon les revendications 1 à 6, dans laquelle le culbuteur (118, 806) a deux points de pivot définis par la première extrémité (120) et la seconde extrémité (122) du culbuteur (118, 806).

8. Soupape (100) selon la revendication 1, dans laquelle le culbuteur (118, 806) s'étend latéralement sur la sortie de soupape (114-1).

9. Soupape (100) selon la revendication 1, dans laquelle le culbuteur (118, 806) peut être actionné en appuyant sur la périphérie supérieure d'un récipient d'eau.
